# EUROPEAN PATENT APPLICATION

(11) **EP 3 467 063 A1**
(43) Date of publication of application: **10.04.2019**
(21) Application number: 17809920.6
(22) Date of filing: 21.03.2017
(51) Int. Cl.: C09J 7/00, B32B 7/12, B32B 27/00, C09J 7/02, C09J 121/00, C09J 133/00

(54) **ADHESIVE SHEET AND ARTICLE**

(30) Priority: 06.06.2016 JP 2016112698; 07.07.2016 JP 2016135058
(71) Applicant: DIC Corporation, Tokyo 174-8520 (JP)
(72) Inventor: AKIYAMA Seiji, Kitaadachi-gun Saitama 362-8577 (JP); MORINO Akinori, Kitaadachi-gun Saitama 362-8577 (JP)
(74) Representative: TBK
(86) International application number: PCT/JP2017/011131
(87) International publication number: WO 2017/212736

(57) **Abstract**

[Problem] The problem to be solved by the present invention is to provide an adhesive sheet that can be easily peeled without causing deformation or the like of the adherend when the load applied per unit area of the adhesive sheet at the time of affixation is set to a light load of about 5 N/cm² or less, and that can exhibit very excellent adhesive strength when the load is set to about 10 N/cm² or more.

[Means for Resolution] The present invention relates to an adhesive sheet comprising an adhesive layer (A) that has a storage modulus at 23°C in the range of 1×10⁴ Pa to 5×10⁶ Pa and has a surface with a center line average surface roughness Ra in the range of 0.2 µm to 5.0 µm to be in contact with an adherend.

## Description

### Technical Field

The present invention relates to an adhesive sheet that can be used in various fields such as production of electronic devices.

### Background Art

Adhesive sheets are examined for use in production scenes of various electronic devices, such as various displays, and copying or multifunctional machines having a copying function, a scanning function, and the like.

A known example of such adhesive sheets is a double-sided adhesive tape in which an adhesive layer is formed on both sides of a nonwoven substrate, characterized in that the double-sided adhesive tape has an interlaminar fracture area rate of 10% or less and a tensile strength of 20 N/10 mm or more in both of the MD direction (longitudinal direction) and the TD direction (lateral direction) (see, for example, PTL 1).

On the other hand, with recent increase in functionality and precision of such electronic devices, it is sometimes required to affix two or more adherends at strictly specified positions without any slight displacement in a production scene of an electronic device.

The affixation operation is generally performed by hand work in many cases. When the affixation is performed by hand work, it is difficult to fix an adherend on such a strictly specified position in one affixation operation. In general, therefore, an adherend is successfully affixed to a predetermined position only after some-times re-affixation operations.

In the meanwhile, adhesive tapes of related arts are designed to be able to exhibit very excellent adhesive strength, for example, for preventing fall of any part from a final product. Thus, the excellent adhesive strength already appears in the re-affixation operations even if the load applied at the time of affixation of an adhesive tape and an adherend is controlled to a light load as small as about 5 N/cm² or less, and the re-affixation operations cannot be efficiently performed in some cases in the related art.

On the other hand, if the adhesive strength is set to a lower value for improving the efficiency of the re-affixation operations, there has been a problem in that the light load of about 5 N/cm² or less often leads to displacement or separation of the adherend and the adhesive tape.

In addition, when the adherend is a thin member which is likely to deform or break (aluminum plate, glass plates, or the like), the adherend may deform or break in the re-affixation operations where the adhesion strength is large and the adherend cannot be reused in some cases in the related art.

### Citation List

### Patent Literature

PTL 1: JP-A-2001-152111

### Summary of Invention

### Technical Problem

The problem to be solved by the present invention is to provide an adhesive sheet or tape that can be prevented from displacing or separating from the adherend and can also be easily peeled from the adherend without causing deformation or the like of the adherend when the load applied per unit area of the adhesive sheet at the time of affixation is set to a light load of about 5 N/cm² or less, and that can exhibit an excellent adhesive strength when the load is set to about 10 N/cm² or more.

### Solution to Problem

It has been found that the present invention solves the above problem by using an adhesive sheet including an adhesive layer that has a surface with a prescribed uneven profile to be in contact with an adherend and has a prescribed storage modulus.

Specifically, the present invention relates to an adhesive sheet including an adhesive layer (A) having a storage modulus at 23°C in the range of 1×10⁴ Pa to 5×10⁶ Pa, the adhesive layer (A) having a surface with a center line average surface roughness Ra in the range of 0.2 µm to 5.0 µm to be in contact with an adherend.

### Advantageous Effects of Invention

The adhesive sheet of the present invention can be repeatedly affixed multiple times without causing deformation or breakage of the adherend even if the adherend is a thin member which is likely to deform or break (aluminum plate, glass plate, or the like), and thus can be suitably used in applications where two or more adherends are to be affixed at a strictly specified position without any slight displacement and then be fixedly bonded.

### Brief Description of Drawings

Fig. 1 is a schematic view illustrating a method for measuring the surface adhesive strength.
Fig. 2 is a schematic view illustrating a method for evaluating the reworkability (re-affixation applicability). Description of Embodiments

The adhesive sheet of the present invention is an adhesive sheet including an adhesive layer (A) that has an storage modulus at 23°C in the range of 1×10⁴ Pa to 5×10⁶ Pa and has a surface with a center line average surface roughness Ra in the range of 0.2 µm to 5.0 µm to be in contact with an adherend. With the use of the adhesive sheet including the adhesive layer (A), when the load at the time of affixation to the adherend is controlled to a light weight of about 5 N/cm² or less, the adhesion area with the adherend is small and thus the adhesive sheet can be repeatedly affixed multiple times without causing deformation, breakage, or the like even if the adherend is a thin member which is likely to deform or break (aluminum plate, glass plate, or the like), and when the load is set to about 10 N/cm² or more, the adhesion area increases and thus the adhesive sheet can exhibit very excellent adhesive strength.

As the adhesive sheet of the present invention, an adhesive sheet in which the adhesive layer (A) has a storage modulus at a frequency of 1 Hz and at 23°C, G₂₃, of 1.0×10⁴ Pa to 5.0×10⁶ Pa is used. With this configuration, when the load at the time of affixation of the adhesive sheet to an adherend is a light weight of about 5 N/cm² or less, re-affixations of the adhesive sheet to the adherend can be performed relatively easily while separation or displacement from the adherend is less likely to occur, and when the load is about 10 N/cm² or more, the uneven shape of the surface of the adhesive layer (A) deforms easily to further increase the adhesiveness between the surface of the adhesive layer (A) and the adherend, resulting in exhibition of very excellent adhesive strength.

The adhesive sheet used preferably includes the adhesive layer (A) having a storage modulus G₂₃ in the range of 5.0×10⁴ Pa to 4.0×10⁶ Pa, more preferably in the range of 7.0×10⁴ Pa to 3.0×10⁶ Pa, further preferably in the range of 1.0×10⁵ Pa to 3.0×10⁶ Pa, furthermore preferably in the range of 2.3×10⁵ Pa to 2.5×10⁶ Pa, furthermore preferably in the range of 4.0×10⁵ Pa to 2.3×10⁶ Pa, and furthermore preferably in the range of 5.0×10⁵ Pa to 2.3×10⁶ Pa. The adhesive sheet used particularly preferably includes the adhesive layer (A) having a storage modulus G₂₃ in the range of 2.0×10⁵ Pa to 2.3×10⁶ Pa for exhibiting very excellent adhesive strength, since the re-affixations of the adhesive sheet to an adherend are then relatively easily performed while separation or displacement from the adherend is less likely to be caused when the load at the time of affixation of the adhesive sheet to the adherend is a light weight of about 5 N/cm² or less, and when the load is about 10 N/cm² or more, the uneven shape of the surface of the adhesive layer (A) deforms easily and the adhesiveness between the surface of the adhesive layer (A) and the adherend is further increased.

The center line average surface roughness Ra of the surface of the adhesive layer (A) to be in contact with an adherend is preferably 0.3 µm to 3.0 µm, more preferably 0.5 µm to 2.8 µm, further preferably in the range of 0.7 µm to 2.5 µm, and furthermore preferably in the range of 1.0 µm to 2.3 µm. It is particularly preferably in the range of 1.5 µm to 2.2 µm since a thin adherend which is likely to deform or break can be repeatedly affixed multiple times without causing deformation or breakage when the load at the time of affixation of the adherend is light, and very excellent adhesive strength can be exhibited when the load is heavy.

The center line average surface roughness Ra of the adhesive layer (A) is measured as follows. A surface measurement of the adhesive layer (A) was performed three times at arbitrary three parts (each part is within a 50 µm × 50 µm square) using "Color 3D Laser Microscope VK-9500" (lens magnification: × 50, measurement mode: super-depth, pitch: 0.05 µm, optical zoom: × 1.0) manufactured by KEYENCE, and the average of the obtained center line average surface roughness values was taken as the center line average surface roughness Ra of the surface of the adhesive layer (A) to be in contact with an adherend.

Even if an adhesive sheet including an adhesive layer (A) having a storage modulus in the above range is merely used as the adhesive sheet, the re-affixations between the adhesive sheet and the adherend after light load cannot be relatively easily performed and the adhesiveness between the adhesive layer (A) and the adherend after heavy load cannot be increased. Even if an adhesive sheet including an adhesive layer (A) having the prescribed center line average surface roughness Ra is merely used as the adhesive sheet, the re-affixations between the adhesive sheet and an adherend after light load cannot be relatively easily performed and the adhesiveness between the adhesive layer (A) and the adherend after heavy load cannot be increased.

In other words, the adhesive sheet of the present invention has achieved resolution of the above problem only after combining the storage modulus and the center line average surface roughness Ra in the above ranges.

The ten-point average surface roughness Rz of the adhesive layer (A) is preferably, but not limited to, 4 µm to 40 µm, more preferably 5 µm to 20 µm. Rz is further preferably 7 µm to 10 µm since air bubbles can be easily removed from the interface between an adherend and the adhesive layer (A) and as a result, poor appearance due to blister or the like of the adhesive sheet and poor performance in thermal conductivity, thermal resistance, adhesive strength, and the like can be further effectively prevented.

As the adhesive sheet of the present invention, an adhesive sheet that has adhesive strength not causing deformation of an aluminum plate in the following test is preferred since such an adhesive sheet can be easily and repeatedly affixed multiple times without causing deformation or breakage of an adherend even if the adherend is a thin member which is likely to deform or break (aluminum plate, glass plate, or the like) : on an aluminum plate with 0.5 mm thickness × 70 mm width × 150 mm length, two test pieces (adhesive sheets) obtained by cutting an adhesive sheet into a strip shape with 10 mm width × 120 mm length are affixed respectively to the two side portions of the length direction of the aluminum plate with 0.5 mm thickness × 70 mm width × 150 mm length in parallel to the sides, and this assembly is placed on the top of an acrylic plate with 2.0 mm thickness × 70 mm width × 150 mm length so that the test pieces are in contact with the acrylic plate, and after three seconds, one end portion in the length direction of the aluminum plate is pulled toward the vertical direction.

On the other hand, the adhesive sheet preferably has a strength measured, for example, by the following procedure of 20 N/cm² or more, more preferably 30 N/cm² or more, and for strongly adhering an adherend, further preferably 40 N/cm² or more: the adhesive sheet is cut into a square frame shape with an outer side length of 14 mm and a width of 2 mm, the cut adhesive sheet is affixed on a transparent acrylic plate having a rectangular parallelepiped shape with a length of 15 mm, a width of 15 mm, and a thickness of 2 mm to form a test piece, then a stainless steel plate (SUS304) with a depth of 20 mm, a width of 50 mm, and a thickness of 1 mm having a 10 mm-diameter hole at the center is affixed to the adhesive sheet-side surface of the test piece so that the centers thereof coincide with each other, and then a pressure is applied with a pressor at 50 N/cm² for 10 seconds: then using a tensile tester (TENSILON RTA-100 manufactured by A & D Company Limited, compression mode) equipped with an 8 mm-diameter stainless steel probe, a force is applied to the acrylic plate with the probe passing through the hole of the stainless steel plate (SUS304) at a pushing rate of 10 mm/min, and the strength at the time of peeling from the stainless steel plate is measured.

As the adhesive sheet of the present invention, a so-called substrate-free adhesive sheet composed of a mono-layered or multi-layered adhesive layer (A), or an adhesive sheet including the adhesive layer (A) formed, directly or via another layer, on one surface or both surfaces of a support, may be used. As the adhesive sheet, an adhesive sheet including the adhesive layer (A) formed, directly or via another layer, on both surfaces of a support is preferably used.

The adhesive layer (A) constituting the adhesive sheet of the present invention preferably contains an adhesive component which is a resin capable of imparting a so-called pressure sensitive adhesion (tackiness) or a tackifying resin usable as needed, and other additives and the like usable as needed.

Examples of adhesive components constituting the adhesive layer (A) include natural rubber polymers, synthetic rubber polymers, acrylic polymers, silicone polymers, urethane polymers, and vinyl ether polymers.

Among them, as the adhesive component, a synthetic rubber polymer or an acrylic polymer is preferably used.

As the synthetic rubber polymer, a styrene-based block copolymer is preferably used. The styrene-based block copolymer refers to a triblock copolymer or a diblock copolymer which has polystyrene units (a1) and polyolefin units (a2), or a mixture thereof.

As the styrene-based block copolymer, for example, a polystyrene-poly(isopropylene)block copolymer, a polystyrene-poly(isopropylene)block-polystyrene copolymer, a polystyrene-poly(butadiene)block copolymer, a polystyrene-poly(butadiene)block-polystyrene copolymer, a polystyrene-poly(butadiene/butylene)block copolymer, a polystyrene-poly(butadiene/butylene)block-polystyrene copolymer, a polystyrene-poly(ethylene/propylene)block copolymer, a polystyrene-poly(ethylene/propylene)block-polystyrene copolymer, a polystyrene-poly(ethylene/butylene)block copolymer, a polystyrene-poly(ethylene/butylene)block-polystyrene copolymer, a polystyrene-poly(ethylene-ethylene/propylene)block copolymer, or a polystyrene-poly(ethylene-ethylene/propylene)block-polysty rene copolymer may be used. Among them, as the styrene-based block copolymer, a block copolymer having a polystyrene unit (a1) and polyisoprene units (a2) is preferably used, and a polystyrene-poly(isopropylene)block copolymer, a polystyrene-poly(butadiene)block copolymer, or a polystyrene-poly(butadiene)block-polystyrene copolymer is further preferably used.

As the acrylic polymer, a polymer of an acrylic monomer may be used. As the acrylic monomer, (meth)acrylic acid or a (meth)acrylic acid alkyl ester, such as 2-ethylhexyl (meth)acrylate or n-butyl (meth)acrylate may be used.

As the tackifying resin, for the purpose of adjusting the strong adhesion of the adhesive layer, for example, rosin tackifying resins, polymerized rosin tackifying resins, polymerized rosin ester tackifying resins, rosin phenol tackifying resins, stabilized rosin ester tackifying resins, disproportionated rosin ester tackifying resins, terpene tackifying resins, terpene phenolic tackifying resins, and petroleum resin tackifying resins may be exemplified.

As the tackifying resin, among them, a terpene phenolic tackifying resin is preferably used. As the terpene phenolic tackifying resin, one of copolymers of conventionally known terpene monomers and phenol that has a softening point of 100°C to 125°C is preferably selected and used for improving the compatibility with a rubber block copolymer or the like and thus imparting excellent adhesion .

The terpene phenol tackifying resin is preferably used in an amount in the range of 30 parts by mass to 120 parts by mass relative to 100 parts by mass of the total of the synthetic rubber polymers or acrylic polymers which are the adhesive component, and for imparting further excellent adhesion, more preferably used in an amount in the range of 40 parts by mass to 100 parts by mass.

As the adhesive component, an adhesive component containing, in addition to the adhesive component mentioned above, a crosslinking agent or another additive or the like as needed may be used.

As the crosslinking agent, for the purpose of improving cohesion of the adhesive layer, a known crosslinking agent, such as an isocyanate crosslinking agent, an epoxy crosslinking agent, an aziridine crosslinking agent, a polyvalent metal salt crosslinking agent, a metal chelate crosslinking agent, a keto-hydrazide crosslinking agent, an oxazoline crosslinking agent, a carbodiimide crosslinking agent, a silane crosslinking agent, or a glycidyl(alkoxy)epoxysilane crosslinking agent may be used.

As the adhesive layer (A), besides the components mentioned above, a foaming agent, a thermally expandable balloon, an antioxidant, a plasticizer, a filler, a pigment, a UV absorber, a UV stabilizer, a flame proofing agent, a flame retardant, or the like may be used as needed to the extent that the effects of the present invention are not impaired.

As the adhesive sheet of the present invention, one including the adhesive layers (A) formed, directly or via another layer, on both the surfaces of a support may be used.

Examples of the supports include: films of polyester resins, such as polyethylene terephthalate, polybutylene terephthalate, and polyethylene naphthalate, polycarbonates, polyarylates, polyamide resins, such as polyurethanes, polyamides, and polyeteramides, polyimide resins, such as polyimides, polyetherimides, and polyamideimides, polysulfone resins, such as polysulfones and polyethersulfones, polyether ketone resins, such as polyether ketones and polyether ether ketones, organic resins, such as polyphenylene sulfides and modified polyphenylene oxides; woven or nonwoven fabric substrates containing organic fibers, such as cellulose fibers, polyester fibers, aramid fibers, and liquid crystal polymer fibers, or inorganic fibers, such as glass fibers, metal fibers, and carbon fibers; films, sheets, or plates of inorganic materials, such as glass plates and metal foils; and laminates thereof.

As the support, a composite, such as a glass fiber reinforced plastic (GFRP), may also be used.

As the support, for example, a woven fabric substrate or nonwoven fabric substrate containing glass fibers, a glass substrate containing a glass fiber composite, a glass plate, or the like, a polyamide resin film, or a polyimide resin film may be used as a substrate.

As the support, one having a surface subjected to a corona treatment or one provided with a primer layer is preferably used since the adhesiveness between the support and the adhesive layer (A) can be improved.

As the support, a support having a communication port may be used. As a support having a communication port, various conventionally known supports mentioned above may be used, and, for example, papers, nonwoven fabrics, porous films, such as the plastic films mentioned above, metal meshes, and punched films may be used. The communication port means one or plural, spatially continuous openings which connect a first surface of a support with a second surface thereof.

As the support, one having a thickness of 1 µm to 200 µm is preferably used, and one having a thickness of 12 µm to 50 µm is more preferably used.

In the adhesive sheet used, for example, the thickness of the adhesive layer (A) provided on one surface of the support is preferably 25 µm or more, more preferably 50 µm to 120 µm, and for obtaining an adhesive sheet that is excellent in cohesion and that exhibits excellent adhesive strength when pressed with a prescribed load, the thickness is further preferably 60 µm to 120 µm.

In the adhesive sheet used, for example, the total thickness of the adhesive layers (A) provided on both the sides of the support is preferably in the range of 50 µm or more, more preferably in the range of 50 µm to 300 µm, and further preferably in the range of 100 µm to 250 µm, and for obtaining an adhesive sheet that is excellent in cohesion and that exhibits excellent adhesive strength when pressed with a prescribed load, the total thickness is furthermore preferably in the range of 100 µm to 210 µm.

The adhesive sheet can be produced by a transfer method in which a coating liquid (adhesive) containing the adhesive component is previously applied on a surface of a release liner using a roll coater or the like, and is dried to thereby form the adhesive layer (A), and then the adhesive layer (A) is affixed on one or both surfaces of the support.

As the form of the coating liquid (adhesive), examples include solvent types, aqueous types, such as emulsion type tacky agents and water soluble tacky agents, solvent free types, such as hot melt tacky agents, UV curable tacky agents, and EB curable tacky agents.

An example of a method for imparting a prescribed center line average surface roughness Ra to the surface of the adhesive layer (A) to be in contact with an adherend is a method using, as the release liner, a release liner having a center line average surface roughness of the release treatment surface preferably in the range of 0.3 µm to 3.0 µm, more preferably from 0.5 µm to 2.8 µm, further preferably from 0.7 µm to 2.5 µm, furthermore preferably from 1.0 µm to 2.3 µm, and furthermore preferably from 1.5 µm to 2.2 µm. A specific example of the method includes applying the coating liquid (adhesive) onto the release treatment surface of a release liner having a center line average surface roughness in the above range, drying the coating liquid to form an adhesive layer (A), affixing the adhesive layer (A) to the surface of a support as needed, and removing the release liner.

The above method transfers, to the surface of the adhesive layer, a center line surface roughness equal to, similar to, or slightly larger than the center line average surface roughness of the release treatment surface.

As the release liner, for example, from among resin films of polyethylene terephthalate, polyethylene, polypropylene, an ethylene-propylene copolymer, and the like, foamed films, papers, such as Japanese paper, foreign paper, glassine paper, nonwoven fabrics, metal foils, and laminated films of combinations thereof, one having a release treatment surface with a center line average surface roughness in the above range may be used.

The shape of the release treatment surface of the release liner can be imparted by a sandblast treatment on a surface of the film. Regarding the shape of the release treatment surface of the release liner, for example, a film obtained by molding a mixture of the resin and a mat material into a film form may also be used.

An example of methods for affixing two or more adherends via the adhesive sheet of the present invention is an affixation method including at least one or more repetitions of a step in which the two or more adherends are affixed via the adhesive sheet, then the adherends are separated, and the two or more adherends are affixed again, that is, a re-affixation step. This method is suitably used for an application, for example, in which the affixation position is strictly specified and positioning is achieved through one or more re-affixation operations. Accordingly, the affixation during the positioning is preferably performed while controlling the load to a light load. Then, after completing the positioning, a step of achieving adhesion with a heavier load is preferably performed.

In this affixation method, from the viewpoint of efficient re-affixation operations, it is preferred that the two or more adherends are affixed via the adhesive sheet with preferably a load of 5 N/cm² or less, more preferably 3 N/cm² or less, and further preferably 2.5 N/cm² or less, and then the adherends are separated, and the two or more adherends are affixed again. Also in the step of affixing the two or more adherends again, the adherends are affixed preferably with a load of 5 N/cm² or less, more preferably 3 N/cm² or less, and further preferably 2.5 N/cm² or less.

In this affixation method, the step of achieving adhesion after completion of the positioning is preferably performed with a heavier load. In this case, from the viewpoint of strongly adhering the two or more adherends, the affixation method preferably includes a step in which two or more adherends are affixed via the adhesive sheet, then the adherends are separated, the two or more adherends are affixed again, and furthermore, adhesion is performed preferably with a load of 10 N/cm² or more, more preferably 15 N/cm² or more, further preferably 25 N/cm² or more, and particularly preferably 30 N/cm² or more.

As the adherend, a thin adherend which is likely to deform or break may be used, and a tabular adherend preferably having a thickness of 5 mm or less, and more preferably 2 mm or less may be used. Examples of materials of the adherend include metals, such as aluminum, and glass.

The adhesive sheet of the present invention can be used for fixing members constituting portable electronic devices. Examples of the members include two or more housings or lens members constituting an electronic device.

With the adhesive sheet of the present invention, re-affixations of the housing and the lens member can be performed without any damage or the like thereof even if a glass, tabular rigid material having a thickness of 2 mm or less, preferably a thickness of about from 1 mm to 1.5 mm, is used as the lens member.

An example of the portable electronic devices is a device having a structure in which a housing and one of a lens member and another housing as the members are joined via the adhesive tape.

The adhesive sheet of the present invention can be used for fixing, for example, a liquid crystal display panel or the like and a glass touch panel member constituting an information display device, such as an on-vehicle display in a production scene of the information display device.

The adhesive sheet of the present invention can be used for fixing, for example, an aluminum decorating member and an on-vehicle display constituting an information display device, such as an on-vehicle display in a production scene of the information display device.

### Examples

The present invention will be described more specifically below with reference to examples.

### (Preparation Example 1) Adhesive (a-1)

A mixture of 100 parts by mass of a styrene-butadiene block copolymer X having a weight average molecular weight of 300,000 (a mixture of a triblock copolymer and a diblock copolymer, the ratio of the diblock copolymer relative to the total amount of the mixture: 50% by mass, the mass ratio of polystyrene units based on the entire styrene-butadiene block copolymer: 30% by mass, the mass ratio of polybutadiene units: 70% by mass) and 65 parts by mass of a terpene phenol tackifying resin (softening point: 115°C, number average molecular weight: 1000) was dissolved in toluene to thereby obtain an adhesive (a-1).

### (Preparation Example 2) Adhesive (a-2)

In a reactor equipped with a stirrer, a reflux condenser, a thermometer, a dropping funnel, and a nitrogen gas introduction port, 44.9 parts by mass of butyl acrylate, 50 parts by mass of 2-ethylhexyl acrylate, 2 parts by mass of acrylic acid, 3 parts by mass of vinyl acetate, 0.1 parts by mass of 4-hydroxybutyl acrylate, and 0.1 parts by mass of 2,2'-azobisisobutylnitrile as a polymerization initiator were dissolved in 100 parts by mass of ethyl acetate, and polymerization was performed at 70°C for 10 hours to thereby obtain an acrylic copolymer Z solution having a weight average molecular weight of 800,000.

Next, 30 parts by mass of a polymerized rosin ester tackifying resin D-135 (manufactured by Arakawa Chemical Industries Ltd.) was added to 100 parts by mass of the acrylic copolymer Z, ethyl acetate was added thereto, followed by mixing, and then 1.1 parts by mass of "CORONATE L-45" manufactured by Nippon Polyurethane Industry, Co., Ltd. (an isocyanate crosslinking agent, solid content: 45% by mass) was added thereto. The mixture was stirred for 15 minutes to thereby obtain an adhesive (a-2).

### (Preparation Example 3) Adhesive (a-3)

A mixture of 100 parts by mass of a styrene-butadiene block copolymer X having a weight average molecular weight of 300,000 (a mixture of a triblock copolymer and a diblock copolymer, the ratio of the diblock copolymer relative to the total amount of the mixture: 50% by mass, the mass ratio of polystyrene units based on the entire styrene-butadiene block copolymer: 30% by mass, the mass ratio of polybutadiene units: 70% by mass) and 80 parts by mass of a terpene phenol tackifying resin (softening point: 115°C, number average molecular weight: 1000) was dissolved in toluene to thereby obtain an adhesive (a-3).

### (Preparation Example 4) Adhesive (a-4)

A mixture of 100 parts by mass of a styrene-butadiene block copolymer X having a weight average molecular weight of 300,000 (a mixture of a triblock copolymer and a diblock copolymer, the ratio of the diblock copolymer relative to the total amount of the mixture: 50% by mass, the mass ratio of polystyrene units based on the entire styrene-butadiene block copolymer: 30% by mass, the mass ratio of polybutadiene units: 70% by mass) and 40 parts by mass of a terpene phenol tackifying resin (softening point: 115°C, number average molecular weight: 1000) was dissolved in toluene to thereby obtain an adhesive (a-4).

### (Preparation Example 5) Adhesive (a-5)

A mixture of 100 parts by mass of a styrene-isoprene block copolymer Y having a weight average molecular weight of 300,000 (a mixture of a triblock copolymer and a diblock copolymer, the ratio of the diblock copolymer relative to the total amount of the mixture: 20% by mass, the mass ratio of polystyrene units based on the entire styrene-isoprene block copolymer Y: 20% by mass, the mass ratio of polyisoprene units: 80% by mass) and 40 parts by mass of a C5 petroleum tackifying resin (softening point: 100°C, number average molecular weight: 885) was dissolved in toluene to thereby obtain an adhesive (a-5) .

### (Preparation Example 6) Adhesive (a-6)

In a reactor equipped with a stirrer, a reflux condenser, a thermometer, a dropping funnel, and a nitrogen gas introduction port, 69.9 parts by mass of butyl acrylate, 25 parts by mass of 2-ethylhexyl acrylate, 2 parts by mass of acrylic acid, 3 parts by mass of vinyl acetate, 0.1 parts by mass of 4-hydroxybutyl acrylate, and 0.1 parts by mass of 2,2'-azobisisobutylnitrile as a polymerization initiator were dissolved in 100 parts by mass of ethyl acetate, and polymerization was performed at 70°C for 10 hours to thereby obtain an acrylic copolymer W solution having a weight average molecular weight of 800,000.

Next, to 100 parts by mass of the acrylic copolymer Z, 10 parts by mass of a rosin ester resin A-100 (manufactured by Arakawa Chemical Industries Ltd.) and 20 parts by mass of a polymerized rosin ester tackifying resin D-135 (manufactured by Arakawa Chemical Industries Ltd.) were added, ethyl acetate was added thereto, followed by mixing, and then, 1.1 parts by mass of "CORONATE L-45" manufactured by Nippon Polyurethane Industry, Co., Ltd. (isocyanate crosslinking agent, solid content: 45% by mass) was added. The mixture was stirred for 15 minutes to thereby obtain an adhesive (a-6).

### (Preparation Example 7) Adhesive (a-7)

In a reactor equipped with a stirrer, a reflux condenser, a thermometer, a dropping funnel, and a nitrogen gas introduction port, 94.9 parts by mass of butyl acrylate, 2 parts by mass of acrylic acid, 3 parts by mass of vinyl acetate, 0.1 parts by mass of 4-hydroxybutyl acrylate, and 0.1 parts by mass of 2,2'-azobisisobutylnitrile as a polymerization initiator were dissolved in 100 parts by mass of ethyl acetate, and polymerization was performed at 70°C for 10 hours to thereby obtain an acrylic copolymer V solution having a weight average molecular weight of 800,000.

Next, to 100 parts by mass of the acrylic copolymer Z, 10 parts by mass of a rosin ester resin A-100 (manufactured by Arakawa Chemical Industries Ltd.) and 20 parts by mass of a polymerized rosin ester tackifying resin D-135 (manufactured by Arakawa Chemical Industries Ltd.) were added, ethyl acetate was added thereto, followed by mixing, and then 1.1 parts by mass of "CORONATE L-45" manufactured by Nippon Polyurethane Industry, Co., Ltd. (isocyanate crosslinking agent, solid content: 45% by mass) was added. The mixture was stirred for 15 minutes to thereby obtain an adhesive (a-7).

### (Preparation Example 8) Adhesive (a-8)

To a mixture of 100 parts by mass of a silicone gum T containing an addition curable polydimethylphenyl polysiloxane having a weight average molecular weight of 350,000, 70 parts by mass of a silicone resin U containing dimethylphenyl polysiloxane having a weight average molecular weight of 600, and 200 parts by mass of toluene was added 1.0 parts by mass of a platinum catalyst "CAT-PL-50T" (manufactured by Shin-Etsu Chemical Co. Ltd), and the mixture was stirred for 15 minutes to thereby obtain an adhesive (a-8).

### (Preparation Example 9) Adhesive (a-9)

To a mixture of 100 parts by mass of a silicone gum T containing an addition curable polydimethylphenyl polysiloxane having a weight average molecular weight of 350,000, 50 parts by mass of a silicone resin U containing a dimethylphenyl polysiloxane having a weight average molecular weight of 600, and 200 parts by mass of toluene was added 1.0 parts by mass of a platinum catalyst "CAT-PL-50T" (manufactured by Shin-Etsu Chemical Co. Ltd.), and the mixture was stirred for 15 minutes to thereby obtain an adhesive (a-9).

### (Comparative Preparation Example 1) Adhesive (a-10)

A mixture of 100 parts by mass of a styrene-butadiene block copolymer X having a weight average molecular weight of 300,000 (a mixture of a triblock copolymer and a diblock copolymer, the ratio of the diblock copolymer relative to the total amount of the mixture: 50% by mass, the mass ratio of polystyrene units based on the entire styrene-butadiene block copolymer: 30% by mass, the mass ratio of polybutadiene units: 70% by mass) and 10 parts by mass of a terpene phenol tackifying resin (softening point: 115°C, number average molecular weight: 1000) was dissolved in toluene to thereby obtain an adhesive (a-10).

### (Example 1)

The adhesive (a-1) was applied on a surface of a release liner having a center line average surface roughness Ra of 1.63 µm using an applicator so as to give a thickness after drying of 88 µm, and was dried at 85°C for 5 minutes to thereby form an adhesive layer. The adhesive layer was affixed to each surface of a polyethylene terephthalate film having a thickness of 25 µm and was pressed at 40 N/cm² for lamination to thereby obtain an adhesive sheet.

### (Example 2)

An adhesive sheet was obtained in the same manner as in Example 1 except for using a release liner having a center line average surface roughness Ra of 0.55 µm in place of the release liner having a center line average surface roughness Ra of 1. 63 µm.

### (Example 3)

An adhesive sheet was obtained in the same manner as in Example 1 except for using the adhesive (a-2) in place of the adhesive (a-1).

### (Example 4)

An adhesive sheet was obtained in the same manner as in Example 1 except for using the adhesive (a-3) in place of the adhesive (a-1).

### (Example 5)

An adhesive sheet was obtained in the same manner as in Example 1 except for using the adhesive (a-4) in place of the adhesive (a-1).

### (Example 6)

An adhesive sheet was obtained in the same manner as in Example 1 except for using the adhesive (a-3) in place of the adhesive (a-1) and using a release liner having a center line average surface roughness Ra of 0.55 µm in place of the release liner having a center line average surface roughness Ra of 1.63 µm.

### (Example 7)

An adhesive sheet was obtained in the same manner as in Example 1 except for using the adhesive (a-5) in place of the adhesive (a-1).

### (Example 8)

An adhesive sheet was obtained in the same manner as in Example 1 except for using the adhesive (a-6) in place of the adhesive (a-1).

### (Example 9)

An adhesive sheet was obtained in the same manner as in Example 1 except for using the adhesive (a-7) in place of the adhesive (a-1).

### (Example 10)

An adhesive sheet was obtained in the same manner as in Example 1 except for using the adhesive (a-8) in place of the adhesive (a-1).

### (Example 11)

An adhesive sheet was obtained in the same manner as in Example 1 except for using the adhesive (a-9) in place of the adhesive (a-1).

### (Comparative Example 1)

An adhesive sheet was obtained in the same manner as in Example 1 except for using a release liner having a center line average surface roughness Ra of 0.02 µm in place of the release liner having a center line average surface roughness Ra of 1.63 µm.

### (Comparative Example 2)

An adhesive sheet was obtained in the same manner as in Example 1 except for using the adhesive (a-10) in place of the adhesive (a-1).

### [Measurement of dynamic viscoelasticity of adhesive layer (A)]

The adhesive used for producing each of the adhesive sheets obtained in Examples and Comparative Examples was applied on a surface of a release liner using an applicator so as to give a thickness after drying of 100 µm, and was dried at 85°C for 5 minutes to thereby form a plurality of adhesive layers each having a thickness of 100 µm.

The adhesive layers obtained above were laminated to produce a test piece containing adhesive layers having a thickness of 2 mm.

Parallel plates having a diameter of 7.9 mm were attached on a viscoelasticity tester (ARES 2kSTD) manufactured by TA Instruments. The test piece was sandwiched between the parallel plates with a compression load of 40 to 60 g, and the storage modulus at 23°C was measured under conditions of a frequency of 1 Hz, a temperature range of -60 to 150°C, and a heating rate of 2°C/min.

### [Method for measuring center line average surface roughness Ra of surface, to be in contact with adherend, of adhesive layer (A)]

The release liner laminated on the adhesive layer (A) constituting the present invention was peeled from each of adhesive sheets obtained in Examples and Comparative Examples, and the center line average surface roughness Ra in the contact surface of the adhesive layer (A) with an adherend was measured by the following method.

A surface measurement was performed at arbitrary three parts (each part is within a 50 µm × 50 µm square) of a surface of the adhesive layer (A) using "Color 3D Laser Microscope VK-9500" (lens magnification × 50, measurement mode: super-depth, pitch: 0.05 µm, optical zoom: × 1.0) manufactured by KEYENCE to measure the center line average surface roughness Ra values. The average of the obtained center line average surface roughness Ra values of the three parts obtained in the above measurement was taken as the center line average surface roughness Ra of the surface of the adhesive layer (A) to be in contact with an adherend.

### [Evaluation A of re-affixation applicability after light load]

The adhesive sheet was cut into a strip shape with 10 mm width × 120 mm length to thereby produce two test pieces (adhesive sheets).

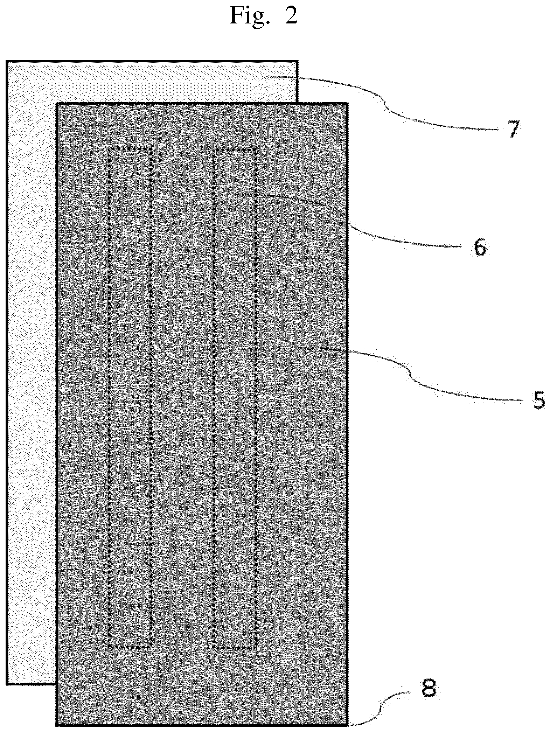

Next, the test pieces were affixed respectively to the side portions of the length direction of an aluminum plate with 0.5 mm thickness × 70 mm width × 150 mm length in parallel to the sides, and the assembly was placed on the top surface of an acrylic plate with 2.0 mm thickness × 70 mm width × 150 mm length so that the test pieces was in contact with the acrylic plate (Fig. 2).

At three seconds after the contact of the test pieces with the acrylic plate, one end portion in the length direction of the aluminum plate (position 8 in Fig. 2) was peeled toward the vertical direction at a rate of 30 m/min. The test pieces and the acrylic plate were loaded at 0.01 N/cm² by the weight of the aluminum plate itself during the 3 seconds.

The peeling test was performed 10 times and the easiness of peeling was evaluated according to the following criteria.

Whether the aluminum plate bent was determined as follows. The aluminum plate after the test was placed on a glass plate having a smooth surface, and was visually observed from the side. Then, the case where the aluminum plate and the glass plate were in a parallel state was determined as "the aluminum plate did not bend", whereas the case where the aluminum plate and the glass plate were not in a parallel state (specifically, the case where separation occurred between the end of the aluminum plate and the glass plate) was determined as "the aluminum plate bent".

○○: The aluminum plate was able to be peeled without bend in all the 10 tests.
○: The aluminum plate was able to be peeled without bend in 8 to 9 of the 10 tests.
○Δ: The aluminum plate was able to be peeled without bend in 5 to 7 of the 10 tests.
Δ: The aluminum plate was able to be peeled without bend in 1 to 4 of the 10 tests.
×: The aluminum plate was not able to be peeled without bend.

### [Evaluation B of re-affixation applicability after light load]

The easiness of peeling was evaluated in the same manner as in the Evaluation A of re-affixation applicability except for changing the peeling rate from 30 m/min to 10 m/min.

○○: The aluminum plate was able to be peeled without bend in all the 10 tests.
○: The aluminum plate was able to be peeled without bend in 8 to 9 of the 10 tests.
○Δ: The aluminum plate was able to be peeled without bend in 5 to 7 of the 10 tests.
Δ: The aluminum plate was able to be peeled without bend in 1 to 4 of the 10 tests.
×: The aluminum plate was not able to be peeled without bend.

### [Evaluation C of re-affixation applicability after light load]

The easiness of peeling was evaluated in the same manner as in the Evaluation A of re-affixation applicability except for changing the peeling rate from 30 m/min to 5 m/min.

○○: The aluminum plate was able to be peeled without bend in all the 10 tests.
○: The aluminum plate was able to be peeled without bend in 8 to 9 of the 10 tests.
○Δ: The aluminum plate was able to be peeled without bend in 5 to 7 of the 10 tests.
Δ: The aluminum plate was able to be peeled without bend in 1 to 4 of the 10 tests.
×: The aluminum plate was not able to be peeled without bend.

### [Evaluation of temporal fixing property]

The adhesive sheet was cut into a strip shape with 10 mm width × 120 mm length to thereby produce two test pieces (adhesive sheets).

Next, the test pieces were affixed respectively to the two side portions of the length direction of an aluminum plate with 0.5 mm thickness × 70 mm width × 150 mm length in parallel to the sides, and the assembly was placed on the top surface of an acrylic plate with 2.0 mm thickness × 70 mm width × 150 mm length so that the test pieces were in contact with the acrylic plate (Fig. 2).

At three seconds after the contact between the test pieces and the acrylic plate, the test pieces were reversed so that the aluminum plate was located on the lower side, and were held in the air for 10 seconds. During the 10 seconds, whether the aluminum plate fell from the test pieces was visually checked. The test pieces and the acrylic plate were loaded at 0.01 N/cm² during the three seconds by the weight of the aluminum plate itself.

The temporal fixing property test described above was performed 10 times and the temporal fixing property was evaluated according to the following criteria.

○: The aluminum plate did not fall in all the 10 tests.
Δ: The aluminum plate fell in 1 to 4 of the 10 tests.
×: The aluminum plate fell in all the 10 tests.

### [Evaluation of adhesion after heavy load]

The adhesive sheet was cut into a strip shape with 10 mm width × 120 mm length to thereby produce two test pieces (adhesive sheets).

Next, the test pieces were affixed respectively to the two side portions of the length direction of an aluminum plate with 0.5 mm thickness × 70 mm width × 150 mm length in parallel to the sides, the assembly was placed on the top surface of an acrylic plate with 2.0 mm thickness × 70 mm width × 150 mm length so that the test pieces were in contact with the acrylic plate (Fig. 2), and a load of 50 N/cm² was applied from the top surface side for 10 seconds.

At three seconds after the load was removed, one end portion in the length direction of the aluminum plate (position 8 in Fig. 2) was peeled toward the vertical direction at a rate of 30 m/min.

The test was performed 10 times and the adhesive strength was evaluated according to the following criteria.

○: The aluminum plate bent in all the 10 tests (the aluminum plate was sufficiently bonded to the acrylic plate) .
Δ: The aluminum plate bent in 6 to 9 of the 10 tests.
×: The aluminum plate bent in 5 times or less of the 10 tests.

### [Evaluation of surface adhesive strength]

Under an environment of 23°C, the adhesive sheet used in each of Examples and Comparative Examples was cut into a square frame shape with an outer side length of 14 mm and a width of 2 mm.

The cut adhesive sheet was affixed to a transparent acrylic plate having a rectangular parallelepiped shape with a length of 15 mm, a width of 15 mm, and a thickness of 2 mm so that one side of the cut adhesive sheet corresponded to one 15 mm-side of the transparent acrylic plate. The obtained assembly was taken as a test piece 1.

Next, a stainless steel plate (SUS304) with a depth of 20 mm, a width of 50 mm, and a thickness of 1 mm having a 10 mm-diameter hole at the center was affixed to the adhesive sheet-side surface of the test piece 1 so that the centers thereof coincided with each other, and a pressure was applied with a pressor at 50 N/cm² for 10 seconds. Then, the pressed state was released, and the assembly was allowed to stand under the environment of 23°C for 1 hour to thereby produce a test piece 2.

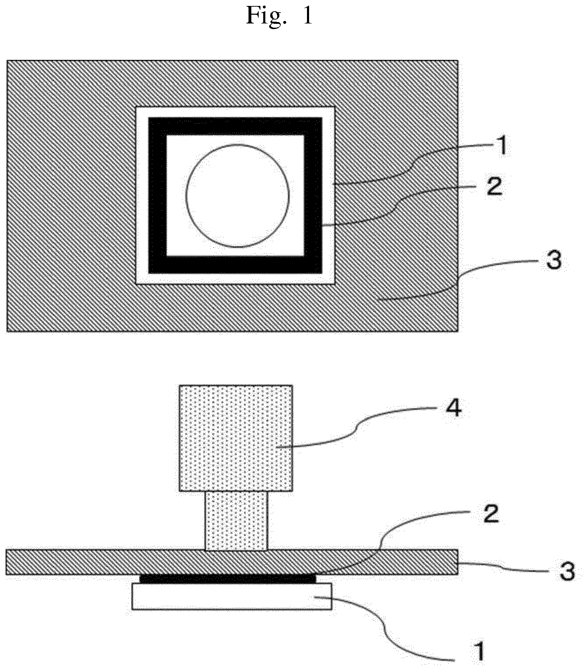

Next, a tensile tester (TENSILON RTA-100 manufactured by A & D Company Limited, compression mode) equipped with an 8 mm-diameter stainless steel probe was provided. A force was applied onto the test piece 1 constituting the test piece 2 from the probe passing through the hole of the stainless steel plate (SUS304) constituting the test piece 2, and the strength (N/cm²) at the time when the test piece 1 was peeled from the stainless steel plate was measured at 23°C (see Fig. 1). The rate of the probe pushing the test piece 1 was set to 10 mm/min.

**[Table 1]**

| | Example 1 | Example 2 | Example 3 | Example 4 | Example 5 |
|---|---|---|---|---|---|
| Styrene butadiene block copolymer X [parts by mass] | 100 | 100 | | 100 | 100 |
| Styrene isoprene block copolymer Y [parts by mass] | | | | | |
| Acrylic copolymer Z [parts by mass] | | | 100 | | |
| Acrylic copolymer W [parts by mass] | | | | | |
| Acrylic copolymer V [parts by mass] | | | | | |
| Terpene phenol tackifying resin [parts by mass] | 65 | 65 | | 80 | 40 |
| Rosin ester tackifying resin [parts by mass] | | | | | |
| Polymerized rosin ester tackifying resin [parts by mass] | | | 30 | | |
| C5 Petroleum resin tackifying resin [parts by mass] | | | | | |
| Silicone gum T [parts by mass] | | | | | |
| Silicone resin U [parts by mass] | | | | | |
| Platinum catalyst CAT-PL-50T [parts by mass] | | | | | |
| CORONATE L-45 [parts by mass] | | | 1.1 | | |
| Center line average surface roughness Ra of surface in contact with adherend of adhesive layer (A) [µm] | 2.01 | 0.73 | 1. 98 | 1. 98 | 1. 99 |
| Storage modulus of adhesive layer (A) at 23°C [Pa] | 1.2E+06 | 1.2E+06 | 8.0E+04 | 9.0E+05 | 4.0E+06 |
| Surface adhesive strength [N/cm²] | 115 | 120 | 50 | 95 | 48 |
| Re-affixation applicability A after light load (peeling rate: 30 m/min) | ○○ | ○ | ○Δ | ○ | ○○ |
| Re-affixation applicability B after light load (peeling rate: 10 m/min) | ○○ | ○ | Δ | ○ | ○○ |
| Re-affixation applicability C after light load (peeling rate: 5 m/min) | ○○ | ○ | Δ | ○ | ○○ |
| Temporal fixing property | ○ | ○ | ○ | ○ | ○ |
| Adhesion after heavy load | ○ | ○ | ○ | ○ | ○ |

**[Table 2]**

| | Example 6 | Example 7 | Example 8 | Example 9 | Example 10 | Example 11 |
|---|---|---|---|---|---|---|
| Styrene butadiene block copolymer X [parts by mass] | 100 | | | | | |
| Styrene isoprene block copolymer Y [parts by mass] | | 100 | | | | |
| Acrylic copolymer Z [parts by mass] | | | | | | |
| Acrylic copolymer W [parts by mass] | | | 100 | | | |
| Acrylic copolymer V [parts by mass] | | | | 100 | | |
| Terpene phenol tackifying resin [parts by mass] | 80 | | | | | |
| Rosin ester tackifying resin [parts by mass] | | | 10 | 10 | | |
| Polymerized rosin ester tackifying resin [parts by mass] | | | 20 | 20 | | |
| C5 Petroleum resin tackifying resin [parts by mass] | | 40 | | | | |
| Silicone gum T [parts by mass] | | | | | 100 | 100 |
| Silicone resin U [parts by mass] | | | | | 70 | 50 |
| Platinum catalyst CAT-PL-50T [parts by mass] | | | | | 1.0 | 1.0 |
| CORONATE L-45 [parts by mass] | | | 1.1 | 1.1 | | |
| Center line average surface roughness Ra of surface in contact with adherend of adhesive layer (A) [µm] | 0.74 | 1. 95 | 1.98 | 1. 97 | 2.00 | 1.99 |
| Storage modulus of adhesive layer (A) at 23°C [Pa] | 9.0E+05 | 2.5E+05 | 1.2E+05 | 1.6E+05 | 7.8E+05 | 1.2E+06 |
| Surface adhesive strength [N/cm²] | 48 | 52 | 51 | 54 | 43 | 46 |
| Re-affixation applicability A after light load (peeling rate: 30 m/min) | ○ | ○Δ | ○Δ | ○Δ | ○ | ○○ |
| Re-affixation applicability B after light load (peeling rate: 10 m/min) | ○ | ○Δ | Δ | ○Δ | ○ | ○○ |
| Re-affixation applicability C after light load (peeling rate: 5 m/min) | ○ | ○Δ | Δ | Δ | ○ | ○○ |
| Temporal fixing property | ○ | ○ | ○ | ○ | ○ | ○ |
| Adhesion after heavy load | ○ | ○ | ○ | ○ | ○ | ○ |

**[Table 3]**

| | Comparative Example 1 | Comparative Example 2 |
|---|---|---|
| Styrene butadiene block copolymer X [parts by mass] | 100 | 100 |
| Styrene isoprene block copolymer Y [parts by mass] | | |
| Acrylic copolymer Z [parts by mass] | | |
| Acrylic copolymer W [parts by mass] | | |
| Acrylic copolymer V [parts by mass] | | |
| Terpene phenol tackifying resin [parts by mass] | 65 | 10 |
| Rosin ester tackifying resin [parts by mass] | | |
| Polymerized rosin ester tackifying resin [parts by mass] | | |
| C5 Petroleum resin tackifying resin [parts by mass] | | |
| Silicone gum T [parts by mass] | | |
| Silicone resin U [parts by mass] | | |
| Platinum catalyst CAT-PL-50T [parts by mass] | | |
| CORONATE L-45 [parts by mass] | | |
| Center line average surface roughness Ra of surface in contact with adherend of adhesive layer (A) [µm] | 0.04 | 2.01 |
| Storage modulus of adhesive layer (A) at 23°C [Pa] | 1.2E+06 | 1.0E+07 |
| Surface adhesive strength [N/cm²] | 120 | 2.1 |
| Re-affixation applicability A after light load (peeling rate: 30 m/min) | × | ○○ |
| Re-affixation applicability B after light load (peeling rate: 10 m/min) | × | ○○ |
| Re-affixation applicability C after light load (peeling rate: 5 m/min) | ○ | ○○ |
| Temporal fixing property | ○ | × |
| Adhesion after heavy load | ○ | × |

As shown in the above results, the results of Examples 1 to 11 were superior in the evaluations A to C of re-affixation applicability after light load, and were also superior in the temporal fixing property and the adhesion after heavy load. On the other hand, Comparative Example 1 were inferior in all of the evaluations A to C of re-affixation applicability after light load, and Comparative Example 2 were inferior in the temporal fixing property and the adhesion after heavy load. Reference Signs List

- 1: Transparent acrylic plate
- 2: Cut adhesive sheet
- 3: Stainless steel plate (SUS304)
- 4: Probe
- 5: Aluminum plate
- 6: Cut adhesive sheet
- 7: Acrylic plate
- 8: Peeling position

## Claims

1. An adhesive sheet comprising an adhesive layer (A) having a storage modulus at 23°C in the range of 1×10⁴ Pa to 5×10⁶ Pa,
the adhesive layer (A) having a surface with a center line average surface roughness Ra in the range of 0.2 µm to 5.0 µm to be in contact with an adherend.

2. The adhesive sheet according to claim 1, which comprises the adhesive layer (A) on at least one surface side of a support.

3. The adhesive sheet according to claim 1 or 2, wherein the adhesive layer (A) is an adhesive layer that contains a rubber polymer or an acrylic polymer.

4. The adhesive sheet according to any one of claims 1 to 3, which exhibits a strength of 20 N/cm² or more as measured by a process comprising: cutting the adhesive sheet into a square frame shape with an outer side length of 14 mm and a width of 2 mm; affixing the cut adhesive sheet on a transparent acrylic plate having a rectangular parallelepiped shape with a length of 15 mm, a width of 15 mm, and a thickness of 2 mm to form a test piece; then affixing a stainless steel plate (SUS304) having a depth of 20 mm, a width of 50 mm, and a thickness of 1 mm and having a 10 mm-diameter hole at the center to the adhesive sheet-side surface of the test piece so that the centers thereof coincide with each other; then applying a pressure from a pressor at 50 N/cm² for 10 seconds; then using a tensile tester (TENSILON RTA-100 manufactured by A & D Company Limited, compression mode) equipped with a 8 mm-diameter stainless steel probe to apply a force to the acrylic plate from the probe passing through the hole of the stainless steel plate (SUS304) at a pushing rate of 10 mm/min; and measuring the strength at the time of peeling from the stainless steel plate.

5. An article comprising two or more adherends bonded with the adhesive sheet according to any one of claims 1 to 4.

6. The article according to claim 5, wherein the adherends are each a glass member or a resin member.

7. An affixation method for affixing two or more adherends to each other via the adhesive sheet according to any one of claims 1 to 4, the method comprising performing at least once a process comprising: affixing the two or more adherends via the adhesive sheet; then separating the adherends; and affixing the two or more adherends again.

8. The affixation method according to claim 7, which comprises a process comprising: affixing the two or more adherends via the adhesive sheet with a load of 5 N/cm² or less; then separating the adherends; and affixing the two or more adherends again.

9. The affixation method according to claim 7 or 8, which comprises a process comprising: affixing the two or more adherends via the adhesive sheet; then separating the adherends; affixing the two or more adherends again; and then bonding the adherends with a load of 10 N/cm² or more.
